# EUROPEAN PATENT SPECIFICATION

(11) **EP 0 931 454 B1**
(45) Date of publication and mention of the grant of the patent: **13.06.2001**
(21) Application number: 99610007.9
(22) Date of filing: 19.01.1999
(51) Int. Cl.: A01K 5/00, B01F 7/00, B01F 15/00

(54) **Apparatus for comminution and mixing of feedstuff components for animal feeds**
Vorrichtung zum Zerkleinern und Mischen von Futtermittelkomponenten für Tierfutter
Dispositif de désintégration et de mélange des composants d'aliment pour animaux

(30) Priority: 22.01.1998 DK 7698
(43) Date of publication of application: 28.07.1999
(73) Proprietor: SKIOLD MULLERUP A/S, 5540 Ullerslev (DK)
(72) Inventor: Osterlund, Aksel, 5540 Ullerslev (DK)
(74) Representative: Lund, Preben

(56) References cited:
- EP-A- 0 427 483
- EP-A- 0 562 693
- EP-A- 0 784 928
- EP-A- 0 809 934
- GB-A- 2 247 631

## Description

### State of the art

The invention concerns an apparatus for the comminution and mixing of feedstuff components for animal feeds and as disclosed in the preamble to claim 1.

Such an apparatus is known, for example from EP-A1-0 562 693. However, this apparatus comprises additional mechanical parts in order to provide an adequate mixing of the feed. The apparatus comprises a centrally-arranged, inclined, co-rotating dividing plate on the shaft between the two worm conveyors, said dividing plate dividing the mixing chamber into two areas. This plate will presumably have a positive effect on the delivery of the feeds when these have been mixed, but on the other hand will result in a division which can lead to longer mixing times in order to achieve an adequate mixing of the feedstuff components. To contribute towards a better mixing, an additional help mechanism is inserted in the form of an arm which moves forwards and backwards over that wall to which the rotation of the mixing worm sweeps the feedstuff, and a counter-cutter consisting of cutting blades which extend in between the worm windings. There is hereby achieved a workable construction which, however, is mechanically complicated and therefore requires maintenance and power supply for the movable arm, which presumably means that the apparatus has a high consumption of energy.

An apparatus as defined in the preamble of claim 1 is known from EP-A1-0 784 928. This apparatus does not comprise technical features such as a counter-cutting edge, so the apparatus is not in any way suitable for comminuting components such as concentrated clumbs, long grass and straw feed, and furthermore when trying to treat material like that, it needs much energy, as the construction is not suitable for the wanted comminution.

### Advantages of the invention

By configuring the apparatus according to the invention as disclosed and characterized in claim 1, a very simple construction is achieved which effects a complete and sufficient mixing of the feedstuff components with a low consumption of energy. The counter-cutting edge leads to a reduction in the torque on the shaft, especially if one of the feedstuff components consists of long grass or straw feed. The counter-cutting edge also provides an increased comminution of the feed, which makes the dispensing of the feed through the discharge opening easier. The alternative to this would otherwise be the necessity of increasing the motor power in order to comminute the long feedstuff components.

The present invention relates in particular to application in connection with a battery-driven, computer-cont-olled feedstuff carriage for automatic weighing of feedstuff components, mixing for fullfeeds and dispensing, e.g. in a string on a feeding table in a loose-housing cowshed. The feedstuff carriage can be suspended on rails, and electronic weighing cells can be built into the carriage suspension in a known manner.

The feeding system is based on the animals being divided into feeding groups with individually composed feedstuff mixtures being dispensed to each group. The feed can consist of various coarse structures which together constitute a complete fullfeed, e.g. a mixture of straw from straw bales, coarsely-cut silage, fine concentrates, mineral dust, liquid molasses, soy-bean cakes etc. The coarse feed can thus consist of components which are large, e.g. long grass or straw feeds, and smaller components which, however, can also be delivered in the form of concentrate dumps etc., these components being comminuted and mixed before being dispensed. The composition of the feedstuff is determined by the computer being fed with information concerning how many kilos of the various feedstuff components an animal in the group shall have each 24 hours, and how many animals there are in each group. For each feeding it is determined which sorts of feedstuffs shall form part of the mixture, which can hereby be varied from feeding to feeding.

At a programmed hour, the feeding starts of those groups which are programmed for the relevant feeding time. The groups are fed in that sequence which has been keyed into the computer, and the mixture consists of the feedstuff components which are keyed in for the relevant group. The individual feedstuff components are weighed in from magazines in the sequence called for by the computer, after which the carriage moves to a position for the mixing. At the mixing position there is provided a large geared motor which drives the mixing worm, e.g. via a claw clutch. After the mixing, the carriage is driven automatically to the keyed-in dispensing position and an opening in the bottom of the carriage is opened. Driven via a battery-driven motor, the mixing worm will then start to rotate slowly.

After the feeding, the carriage returns to the mixing position and is ready for a new feeding sequence. After the feeding of the last group in the feeding sequence, the carriage stops in a home position, which can be the mixing position where a charging contact rail establishes contact between the batteries in the carriage and a charging apparatus.

By configuring the apparatus according to the invention as disclosed in claim 1, a good comminution and adequate mixing of the feedstuff components is achieved with a mechanically simple construction, also if some of the feedstuff components contain long grass or straw feeds. It is important that the feed is both comminuted and mixed sufficiently before the dispensing takes place, in that the dispensing is effected with a battery-driven motor. In order to achieve a large capacity in feeding plants where use is made of such an apparatus according to the invention, it is also important that while the apparatus is in that position where the mixing is effected by an external motor, the mixing is carried out quickly and effectively so that the apparatus has a large capacity, which means that it can serve a large number of feeding groups, whereby an economical and profitable installation is achieved. Furthermore, it is very important that the possible subsequent mixing during the dispensing of the feed and the dispensing itself is carried out with a minimum consumption of energy, the reason being that the source of energy for this purpose is the battery built into the carriage, i.e. the lower the energy consumption, the greater the capacity.

Tests have shown that it can be an advantage to configure the apparatus according to the invention as disclosed and characterized in claim 2, whereby the edge of the feeder plate extends in full length over the opening with the dispensing shutter, so that with this configuration of the worm windings an increased cutting effect is achieved.

In order to achieve an effective comminutior and sufficient mixing of the feedstuff components, it can be an advantage to configure the apparatus as disclosed in more detail and as characterized in claims 3 and 4. Moreover, this configuration results in a low consumption of energy.

The apparatus according to the invention comprises a counter-cutting edge as disclosed in more detail and as characterized in claims 5-6.

The speed of the dispensing can be increased if the apparatus according to the invention is configured as disclosed and characterized in claim 7, in that the edge and the radial plate part hereby assist in bringing the mixed feed in towards the central area of the apparatus where the discharge opening is disposed.

By configuring the apparatus according to the invention as disclosed and characterized in claim 8, a quick and complete dispensing of the mixed feed is achieved. By configuring the apparatus according to the invention as disclosed and characterized in claim 9, it is ensured that feedstuff components which the worm windings sweep towards the radial plate part always fall back in the mixing mechanism.

Finally, the apparatus according to the invention can be configured as disclosed and characterized in claim 10, whereby an optimised apparatus with large capacity is achieved without a high consumption of energy.

### The drawing

The invention will now be described in more detail with reference to the drawing, in that
- fig. 1: shows a feeding carriage on a rail element, said feeding carriage comprising an apparatus according to the invention,
- fig. 2: shows the feeding carriage in fig. 1 seen from above,
- fig. 3: shows a vertical, plane section, III-III, in fig. 2, and
- fig. 4: shows a vertical, plane section, IV-IV, transversely of the feeding carriage in fig. 2.

### Detailed explanation of the invention

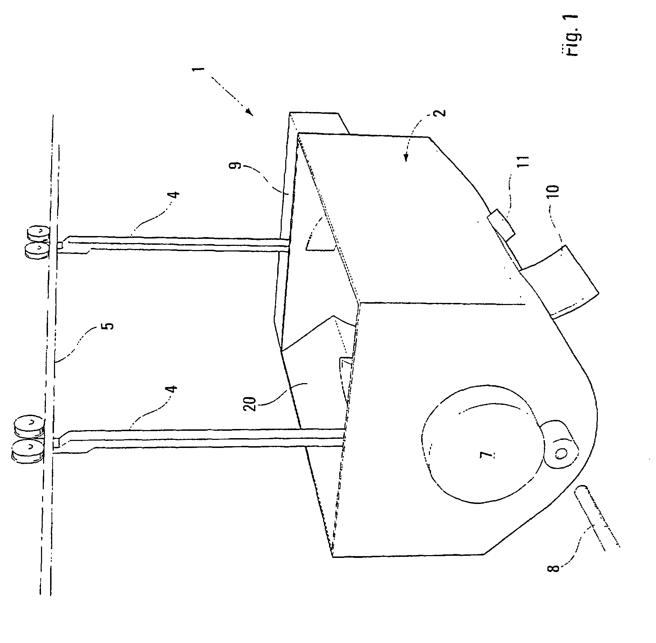

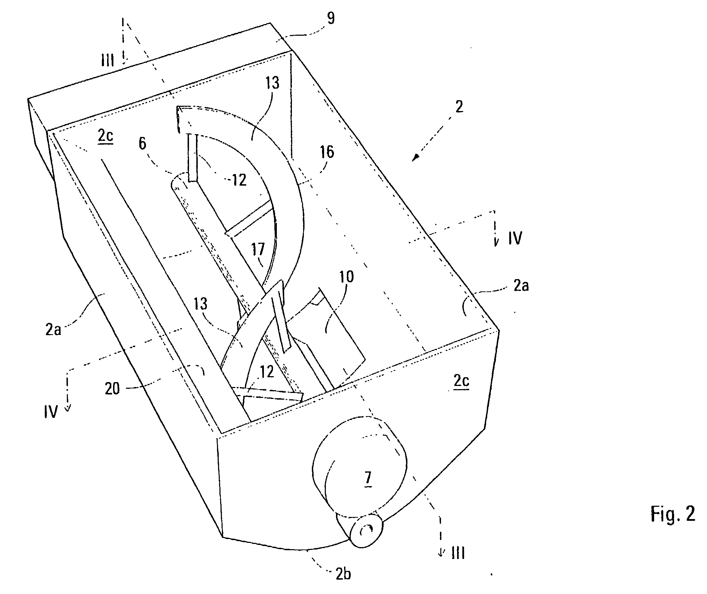

A feeding carriage 1 in figs. 1 and 2 comprises an elongated, trough-shaped container 2 which is open upwards for filling with feedstuff components, e.g. from a number of feedstuff silos. The container is suspended in two arms 4 with wheels which run on a suspended driving rail 5 in a commonly-known manner.

The wheels also comprise a not-shown driving motor which is driven by a battery built into the feeding carriage.

When the feeding carriage 1 is not in operation, or when it is in a position in which it is filled with feedstuff components, it is parked in such a manner that it automatically establishes contact with contact rails, so that a charging apparatus can supply electric current to a battery in the inner driving device 9. The inner driving device 9 comprises a battery, a motor, e.g. a direct current motor, and the electronic control circuit for the carriage. The direct current motor can be coupled in engagement with the shaft 6 in the container. This function is commonly known and is therefore not shown or described in more detail in connection with the explanation of the invention.

Furthermore, the feeding carriage comprises a so-called outer driving device 7 which, at the position for the filling of feedstuff components, can be brought into contact with an external driving shaft 8, so that the mixing and comminution of the feedstuff components which shall take place can be effected with the use of external power, so that power is not drawn from the carriage's own battery in the inner driving device 9.

Consequently, the battery in the inner driving device 9 supplies current only for the driving of the feeding carriage along the rail 5 and for the rotation of the shaft 6 in connection with the dispensing of feeds, which is described in more detail in the following.

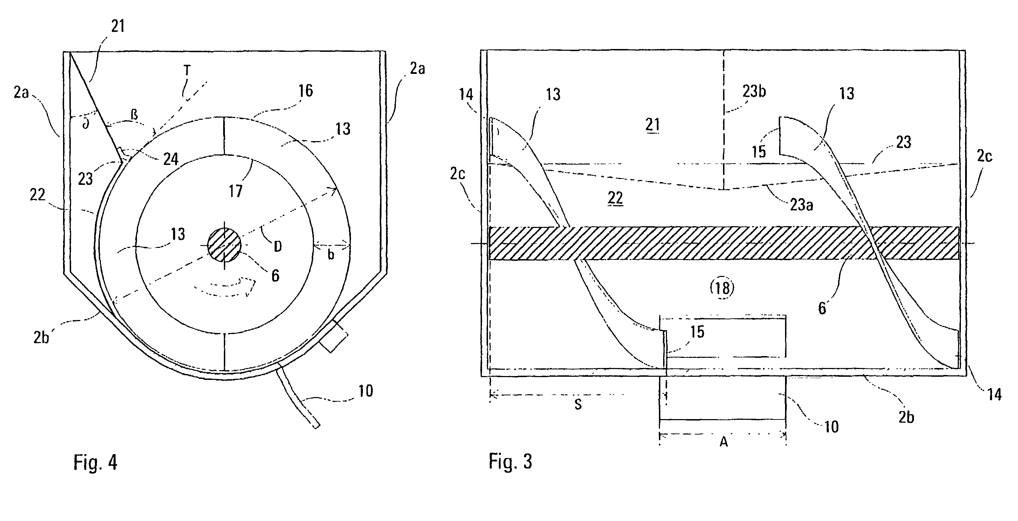

For the dispensing of the feeds, the apparatus has a centrally-placed discharge opening 10 which can be opened and closed by a mechanism 11 arranged in connection with the shutter, which mechanism can be controlled, e.g. by the carriage's control circuit, and be supplied with power from the carriage's battery, if necessary. The discharge shutter is preferably configured as shown in fig. 4, so that the feed mixture can easily be dispensed onto a feeding table under the apparatus.

The invention, which concerns the comminution and mixing of feedstuff components with the mixing mechanism existing in the apparatus, will now be described in detail with reference to the drawing, particularly figs. 3 and 4 of the drawing, which show sections of the apparatus in fig. 2, but where parts which are of no significance for the mixing mechanism have been omitted.

The container 2 comprises a bottom 2b which is partly cylindrical in shape so that it is able to partly surround the worm windings discussed later, and substantially vertical sides 2a and substantially vertical end walls 2c in which the mixing mechanism is housed.

On the inside at one side of the container there is placed a feeder plate 20 (see figs. 1 and 2) with a plate part 22 which is solidly secured to the wall, preferably welded, and configured in such a manner that in continuation of the bottom 2b it surrounds a part of the worm windings, see fig. 4. The feeder plate 20 comprises an edge 23, e.g. produced by bending of the plate, and hereafter continues into a sloping part 21 which extends in a substantially radial direction in relation to the shaft 6.

The radial plate part 21 forms an angle α to the vertical, i.e. to the plate wall 2a, and an angle β to the tangent T of the worm windings, see fig. 4. The angle α is less than the slide angle of the feed, so that feeds or feedstuff components cannot remain on the plate 21, but immediately fall down towards the worm windings. The angle β, which is in the order of 70-90°, ensures that there is less tendency for the feedstuffs to get wedged between the trough and the worm windings, and the torque on the shaft 6 is hereby reduced, which results in a reduction in the consumption of energy.

A rail 24 can be provided at the edge 23, this rail constituting a counter-cutting edge in relation to the direction of rotation of the worm windings, and contributing towards the comminution of the feedstuff components. In practice, the distance between the rail 24 and the worm windings is adjustable and can be set in the range from approx. 1mm to approx. 10mm, preferably to approx. 2-3mm, though depending on the feedstuff components being used.

The edge 23 is preferably straight but can, however, be configured as two straight lines which centrally form an obtuse angle with the apex pointing in the direction of rotation of the shaft 6, see references 23a and 23b in fig. 3. If, in this case, use is also made of a counter-cutting edge 24, this must also be of a corresponding shape.

The through-going driving shaft 6 is provided with two oppositely-directed worm windings 13 consisting of suitably shaped, solid metal blades, each with an outer edge 16 and an inner edge 17 and secured by means of arms 12. The parts 12, 13 are preferably welded solidly together, and the arms 12 are welded solidly to the shaft 6. The worm windings 13 themselves have a breadth b which is less than the distance between the inner edge 17 and the surface of the shaft 6, hereby providing plenty of room for the feedstuff components to be able to pass through the worm windings, thus avoiding a clumping together of the feedstuff components. The outer edge 16 of the worm windings 13 constitutes a cylindrical surface so that the setting of the rail 24 can be effected in a sufficiently precise manner.

The two oppositely-directed worm windings also comprise outer ends 14 which reach almost all the way out to the end walls 2c of the container, and at their opposite ends they have inner radial edges 15 lying on each their side of the shaft, e.g. staggered 180° and at a distance from each other, hereby giving rise to a free middle area 18. In the middle area 18 there is a discharge opening 10. The discharge opening has a breadth A which is so great that the worm windings extend in over the opening, possibly so far over that they meet in a central plane but opposite each other in relation to the shaft 6. Each worm winding has a pitch S which corresponds substantially to twice the diameter D of a worm winding.

### Example

A feedstuff container with an apparatus according to the invention can, for example, have the following dimensions:

| | |
|---|---|
| Volume | 3m³ |
| Feedstuff weight | 1000kg |
| Own weight | 900kg |

Feedstuff mixture consisting of grass silage, straw, maize, rolled grain, molasses and mineral dust.

| | |
|---|---|
| Mixing time | Approx. 8 mins. |
| External drive motor | 9.2kW geared motor |
| Internal drive motor | 24V DC motor |
| Internal battery | 24V 300 AmpH |
| Capacity | Approx. 200 untethered cows divided into a maximum of 9 feed groups |

The mixing time can be reduced if the feedstuff components which are the most coarse are added first. When these have been comminuted and mixed, e.g. after 4 mins., the remaining feedstuff components are added and a further mixing is carried out, e.g. 2-4 mins.

## Claims

1. Apparatus for comminution and mixing of feedstuff components for animal feeds, comprising an elongated, trough-shaped container (2) having a central bottom area (2b) in which there is a closable discharge opening (10) for feeds, said apparatus comprising
- a horizontal, through-going, rotating shaft (6) on which a worm conveyor is mounted on each side of the discharge opening, the worm windings (13) of said worm conveyors being arranged in such a manner that both conveyors sweep the feedstuff components in towards the middle area (18) of the container,
- that the bottom area (2b) of the trough is arranged in such a manner that it partly surrounds the conveyor worms around a part of their circumference, preferably less than half of their circumference, and
- the middle area (18) between the worm windings and over the discharge opening is passed only by the shaft (6),
- each of the conveyor worms is terminated with a radial edge (15) towards the middle area, said edges lying on each their side of the shaft, **characterized** in that
- the surrounding of the conveyor worms by the bottom area in the direction opposite to the direction of rotation comprises a feeder plate (20) with a plate part (22) which partly surrounds the worm windings and extends into a substantially radial plate part (21), and here forms an edge (23), said edge (23) on the feeder plate (21,22) comprising a counter-cutting edge (24).

2. Apparatus according to claim 1, **characterized** in that the worm windings (13) are lengthened in the middle area so that they extend for full length and meet in a vertical plane, substantially in the centre of the discharge opening.

3. Apparatus according to claim 1 or 2, **characterized** in that the worm windings (13) comprise an outer edge (16) and an inner edge (17), and where the inner edge lies at a distance from the surface of the shaft (6).

4. Apparatus according to claim 3, **characterized** in that said distance is greater than the breadth (b) of the worm winding.

5. Apparatus according to any of the foregoing claims, **characterized** in that the counter-cutting edge extends forward towards and almost touches the outer edge (16) of the worm windings (13).

6. Apparatus according to any of the foregoing claims, **characterized** in that the edge (23) extends in a straight line parallel with the shaft (6).

7. Apparatus according to any of the claims 1-5, **characterized** in that the edge (23a) extends as two straight lines which centrally form an obtuse angle with the apex facing in the direction of rotation of the shaft (6).

8. Apparatus according to any of the foregoing claims, **characterized** in that the extent of the discharge opening (10) in the axial direction (A) is greater than the distance between the worm windings' radial edges (15) which face towards each other.

9. Apparatus according to any of the foregoing claims, **characterized** in that the radial part (21) of the feeder plate forms an angle (α) in relation to the vertical which is less than the slide angle of the feed.

10. Apparatus according to any of the foregoing claims, **characterized** in that the pitch (S) of each worm winding (13) corresponds substantially to 180° encirclement of the shaft (6), and that the outer diameter (D) of each worm winding (13) corresponds substantially to half of the pitch (S), i.e. 2D≅S.

## Patentansprüche

1. Vorrichtung zum Zerkleinern und Mischen von Futtermittelkomponenten für Tierfutter, die einen verlängerten, trogförmigen Behälter (2) umfaßt, der einen zentralen Bodenbereich (2b) hat, in dem es eine schließbare Auslaßöffnung (10) für Futter gibt, die Vorrichtung umfassend
- eine horizontale, durchgehende, rotierende Welle (6), auf der zu jeder Seite der Auslaßöffnung ein Schneckenförderer aufgebracht ist, wobei die Schneckenwindungen (13) der Schneckenförderer in solch einer Weise angeordnet sind, daß beide Förderer die Futtermittelkomponenten zu dem mittleren Bereich (18) des Behälters hin räumen,
- daß der Bodenbereich (2b) des Trogs in solch einer Weise angeordnet ist, daß er die Förderschnecken entlang einem Teil von deren Umfang teilweise, vorzugsweise entlang weniger als die Hälfte des Umfangs, umgibt, und
- der mittlere Bereich (18) zwischen den Schneckenwindungen und über der Auslaßöffnung wird nur von der Welle (6) passiert,
- jede der Förderschnecken ist mittels einer radialen Kante (15) zu dem mittleren Bereich hin begrenzt, wobei die Kanten auf jeder Seite der Welle liegen, **gekennzeichnet dadurch,** daß
- die Umfassung der Förderschnecken durch den Bodenbereich in der der Drehrichtung entgegengesetzten Richtung eine Zufuhrplatte (20) mit einem Plattenteil (22) umfaßt, der die Schnekkenwindungen teilweise umgibt und sich zu einem im wesentlichen radialen Plattenteil (21) erstreckt, und hier eine Kante (23) bildet, die an der Zufuhrplatte (21, 22) eine gegenschneidende Kante (24) umfaßt.

2. Vorrichtung nach Anspruch 1, **dadurch gekennzeichnet,** daß die Schneckenwindungen (13) in den mittleren Bereich verlängert sind, so daß sie sich zur vollen Länge erstrecken und sich in einer vertikalen Ebene treffen, im wesentlichen bei der Mitte der Auslaßöffnung.

3. Vorrichtung nach Anspruch 1 oder 2, **dadurch gekennzeichnet,** daß die Schneckenwindungen (13) eine äußere Kante (16) und eine innere Kante (17) umfassen und dabei die innere Kante mit einem Abstand von der Oberfläche der Welle (6) gelegen ist.

4. Vorrichtung nach Anspruch 3, **dadurch gekennzeichnet,** daß der Abstand größer als die Breite (b) der Schneckenwindung ist.

5. Vorrichtung nach einem der vorhergehenden Ansprüche, **dadurch gekennzeichnet,** daß die gegenschneidende Kante sich vorwärts gegen die äußere Kante erstreckt und die äußere Kante (16) der Schneckenwindungen (13) nahezu berührt.

6. Vorrichtung nach einem der vorhergehenden Ansprüche, **dadurch gekennzeichnet,** daß die Kante (23) sich in einer geraden Linie parallel zu der Welle (6) erstreckt.

7. Vorrichtung nach einem der vorhergehenden Ansprüche 1 - 5, **dadurch gekennzeichnet,** daß die Kante (23a) sich als zwei gerade Linien erstreckt, welche zentral einen stumpfen Winkel bilden, wobei die Winkelspitze in Richtung der Rotation der Welle (6) gewendet ist.

8. Vorrichtung nach einem der vorhergehenden Ansprüche, **dadurch gekennzeichnet,** daß das Ausmaß der Auslaßöffnung (10) in axialer Richtung (A) größer ist als der Abstand zwischen der Schneckenwindungen radialen Kanten (15), die einander zugewendet sind.

9. Vorrichtung nach einem der vorhergehenden Ansprüche, **dadurch gekennzeichnet,** daß der radiale Teil (21) der Zufuhrplatte in Relation zu der Vertikalen einen Winkel (α) bildet, der kleiner als der Gleitwinkel der Zufuhr ist.

10. Vorrichtung nach einem der vorhergehenden Ansprüche, **dadurch gekennzeichnet,** daß die Steigung (S) jeder Schraubenwindung (13) im wesentlichen einer 180°-Umgreifung der Welle (6) entspricht und daß der Außendurchmesser (D) jeder Schnekkenwindung (13) im wesentlichen der Hälfte der Steigung (S) entspricht, d. h. 2D≅S.

## Revendications

1. Dispositif pour broyer et mélanger des aliments pour les fourrages des animaux, comprenant un conteneur (2) allongé, en forme d'auge, ayant une partie inférieure centrale (2b) dans laquelle il y a une ouverture de décharge (10), pouvant être fermée, pour la distribution du fourrage, ledit dispositif présentant
- un arbre rotatif (6) horizontal, allant de bout en bout, sur lequel est monté un convoyeur à vis de chaque côté de l'ouverture de décharge, les enroulements de vis (13) desdits convoyeurs à vis étant agencés de telle manière que les deux convoyeurs balayent les aliments à l'intérieur vers la partie centrale (18) du conteneur,
- le fait que la partie inférieure (2b) de l'auge est agencée de telle manière qu'elle entoure partiellement les convoyeurs à vis sur une partie de leur circonférence, de préférence sur moins de la moitié de leur circonférence, et
- que la partie centrale (18) entre les enroulements de vis et au-dessus de l'ouverture de décharge est traversée uniquement par l'arbre (6),
- le fait que chacun des convoyeurs à vis est terminé par un bord radial (15) vers la partie centrale, lesdits bords étant situés chacun de leur côté de l'arbre, **caractérisé en ce que**
- l'entourage des convoyeurs à vis par la partie inférieure dans la direction opposée au sens de rotation comprend une plaque d'alimentation (20) avec une partie de plaque (22) qui entoure partiellement les enroulements de vis et se poursuit en une partie de plaque (21) essentiellement radiale, et forme ici un bord (23), ledit bord (23) sur la plaque d'alimentation (21, 22) comprenant un bord contre-couteau (24).

2. Dispositif selon la revendication 1, **caractérisé en ce que** les enroulements de vis (13) sont étirés dans la partie centrale de sorte qu'ils s'étendent dans toute leur longueur et se rejoignent dans un plan vertical, essentiellement dans le centre de l'ouverture de décharge.

3. Dispositif selon la revendication 1 ou 2, **caractérisé en ce que** les enroulements de vis (13) comprennent un bord extérieur (16) et un bord intérieur (17), le bord intérieur étant situé à distance de la surface de l'arbre (6).

4. Dispositif selon la revendication 3, **caractérisé en ce que** ladite distance est plus grande que la largeur (b) de l'enroulement de vis.

5. Dispositif selon l'une des revendications précédentes, **caractérisé en ce que** le bord contre-couteau s'étend vers l'avant en direction du bord extérieur (16) des enroulements de vis (13), jusqu'à presque le toucher.

6. Dispositif selon l'une des revendications précédentes, **caractérisé en ce que** le bord (23) s'étend sur une ligne droite parallèle à l'arbre (6).

7. Dispositif selon l'une des revendications 1 à 5, **caractérisé en ce que** le bord (23a) s'étend comme deux lignes droites qui forment au centre un angle obtus dont l'apex fait face au sens de rotation de l'arbre (6).

8. Dispositif selon l'une des revendications précédentes, **caractérisé en ce que** la dimension de l'ouverture de décharge (10) dans le sens axial (A) est plus grande que la distance entre les bords radiaux (15) des enroulements de vis qui se font face.

9. Dispositif selon l'une des revendications précédentes, **caractérisé en ce que** la partie radiale (21) de la plaque d'alimentation forme un angle (α) par rapport à la verticale, lequel angle est inférieur à l'angle de glissement des aliments.

10. Dispositif selon l'une des revendications précédentes, **caractérisé en ce que** le pas (S) de chaque enroulement de vis (13) correspond essentiellement à un encerclement à 180° de l'arbre (6), et en ce que le diamètre extérieur (D) de chaque enroulement de vis (13) correspond essentiellement à la moitié du pas (S), soit 2D=S.
